# EUROPEAN PATENT APPLICATION

(11) **EP 4 236 254 A1**
(43) Date of publication of application: **30.08.2023**
(21) Application number: 20963001.1
(22) Date of filing: 30.11.2020
(51) Int. Cl.: H04L 47/00

(54) **MESSAGE PROCESSING METHOD AND DEVICE**

(71) Applicant: Huawei Technologies Co., Ltd., Shenzhen, Guangdong 518129 (CN)
(72) Inventor: ZHANG, Xianfu, Shenzhen, Guangdong 518129 (CN); HAN, Bing, Shenzhen, Guangdong 518129 (CN); TAO, Lichun, Shenzhen, Guangdong 518129 (CN); LI, Nan, Shenzhen, Guangdong 518129 (CN)
(74) Representative: MERH-IP Matias Erny Reichl Hoffmann Patentanwälte PartG mbB
(86) International application number: PCT/CN2020/132671
(87) International publication number: WO 2022/110112

(57) **Abstract**

Embodiments of this application relate to the field of communication, and disclose a packet processing method and apparatus, to alleviate a problem of high power consumption of a processor in a pipeline architecture in the conventional technology. A specific solution is as follows: A packet parsing module parses a first packet, and extracts first packet information from the first packet if it is determined that service complexity corresponding to the first packet is lower than a preset degree. A data amount of the first packet information is less than a data amount of second packet information, the second packet information is information extracted from a second packet, and service complexity of the second packet is higher than the preset degree. The packet parsing module sends the first packet information to a packet distribution module. The packet distribution module receives the first packet information, and sends the first packet information to a processor pipeline module. The processor pipeline module receives the first packet information, and processes the first packet information.

## Description

### TECHNICAL FIELD

Embodiments of this application relate to the field of communication, and in particular, to a packet processing method and apparatus.

### BACKGROUND

To improve data processing efficiency, a processor may process data by using a pipeline architecture. In the pipeline architecture, packet processing is divided into a plurality of steps, each step is allocated to one processing unit, and after each processing unit completes processing, a data packet is sent to a next processing unit until processing is completed. The pipeline architecture does not accelerate execution of a single packet, but different operation steps of a plurality of packets may be simultaneously executed. Therefore, a packet processing speed is generally accelerated, and program execution time is reduced.

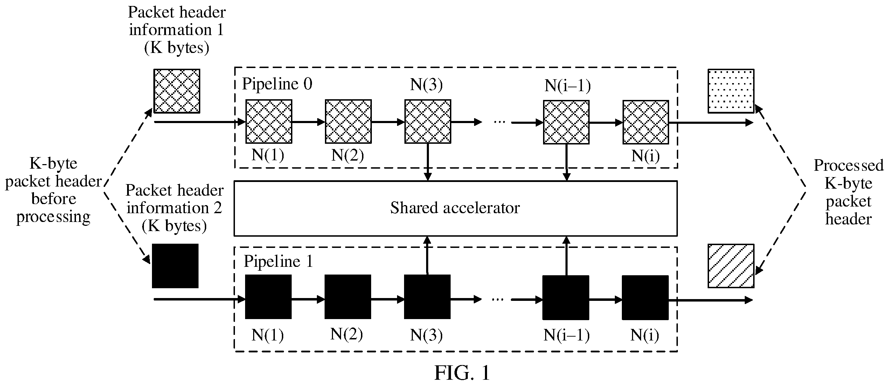

FIG. 1 is a schematic diagram of data processing in a pipeline architecture. As shown in FIG. 1, for example, a processor can process two packets in one clock cycle. The processor includes two pipelines (Pipeline): a pipeline 0 (Pipeline 0) and a pipeline 1 (Pipeline 1), and each pipeline includes i processor nodes. To reduce power consumption of data processing, first K bytes of data of a packet are generally always intercepted as packet header information, the packet header information is sent to the processor node for processing, and data outside the packet header is stored in a shared cache.

However, in this solution, regardless of a packet with a complex service or a packet with a simple service, first K bytes of data of the packet are always intercepted as a packet header and sent to the processor node for processing. Therefore, processing bandwidth of all processor nodes is consumed, and power consumption of the processor is increased.

### SUMMARY

Embodiments of this application provide a packet processing method and apparatus, which can match a processing capability in real time based on complexity of a packet, to reduce power consumption of a processor.

To achieve the foregoing objectives, the following technical solutions are used in embodiments of this application.

According to a first aspect of embodiments of this application, a packet processing method is provided. The method includes: A packet parsing module parses a first packet, and extracts first packet information from the first packet if it is determined that service complexity corresponding to the first packet is lower than a preset degree. A data amount of the first packet information is less than a data amount of second packet information, the second packet information is information extracted from a second packet, and service complexity of the second packet is higher than the preset degree. The packet parsing module sends the first packet information to a packet distribution module. The packet distribution module receives the first packet information, and sends the first packet information to a processor pipeline module. The processor pipeline module receives the first packet information, and processes the first packet information. In this solution, service complexity corresponding to a packet is identified, and based on different service complexity, a data amount of packet information extracted from a packet with a simple service is less than a data amount of packet information extracted from a packet with a complex service. Therefore, in a process of sending packet information of a simple packet to a processor pipeline, bandwidth of the processor pipeline may be reduced, and power consumption of a processor may be reduced. In other words, in this solution, a processing capability can be matched in real time based on complexity of the packet, so that the power consumption of the processor can be reduced.

Optionally, there may be one or more preset degrees. To be specific, there may be one or more classification levels of service complexity corresponding to the packet. For a same preset degree, a packet whose service complexity is lower than the preset degree is simpler than a packet whose service complexity is higher than the preset degree, and a data amount of first packet information extracted from the packet whose service complexity is lower than the preset degree is less than a data amount of second packet information extracted from the packet whose service complexity is higher than the preset degree.

With reference to the first aspect, in a possible implementation, if the packet distribution module receives N pieces of first packet information, the method further includes: The packet distribution module merges M pieces of first packet information in the N pieces of first packet information to obtain merged information. N is an integer greater than 1, and M is an integer greater than 1 and less than or equal to N. In this solution, when receiving packet information of a plurality of simple packets, the packet distribution module may merge the packet information of the plurality of simple packets, so that the plurality of simple packets corresponding to the merged information may be processed in parallel on one pipeline in the processor pipeline module, to further reduce the power consumption of the processor.

With reference to the first aspect and the foregoing possible implementation, in another possible implementation, the M pieces of first packet information are a plurality of pieces of first packet information consecutively received by the packet distribution module. In this solution, when merging the packet information of the plurality of simple packets, the packet distribution module may merge packet information of a plurality of simple packets consecutively received by the packet distribution module, so that the plurality of simple packets corresponding to the merged information may be processed in parallel on one pipeline in the processor pipeline module, to further reduce the power consumption of the processor.

With reference to the first aspect and the foregoing possible implementations, in another possible implementation, the processor pipeline module includes a plurality of pipelines, and that the packet distribution module sends the first packet information to the processor pipeline module includes: The packet distribution module sends the merged information to a preset pipeline in the processor pipeline module. In this solution, the packet distribution module may send one piece of merged information to a preset pipeline, so that some processor nodes in the processor pipeline module may not be flipped, to further reduce the power consumption of the processor

With reference to the first aspect and the foregoing possible implementations, in another possible implementation, that the processor pipeline module processes the first packet information includes: A processor node in the preset pipeline parses the merged information to obtain M first packets, and the processor node in the preset pipeline processes the M first packets in parallel. In this solution, a processor node in a pipeline parses the merged information into a plurality of packets for processing, so that processor nodes in some pipelines are not flipped, to further reduce the power consumption of the processor.

With reference to the first aspect and the foregoing possible implementations, in another possible implementation, the merged information includes a first identifier, and the first identifier indicates a quantity of packets corresponding to the merged information. In this solution, the first identifier is added to the merged information, so that after receiving the merged information, the processor node may parse the merged information into a plurality of packets for processing.

With reference to the first aspect and the foregoing possible implementations, in another possible implementation, a data amount of the merged information is less than or equal to the data amount of the second packet information. In this solution, a data amount of merged information merged by the packet information of the plurality of simple packets is not greater than a data amount of packet information of a complex packet, so that one piece of merged information may be sent to one pipeline, and one pipeline may process a plurality of pieces of packet information that form the merged information in parallel.

With reference to the first aspect and the foregoing possible implementations, in another possible implementation, the data amount of the first packet information is half of the data amount of the second packet information. In this solution, packet information of a small data amount is extracted from the simple packet, to reduce the bandwidth of the processor pipeline, and the power consumption of the processor Compared with the conventional technology in which K bytes of packet information are always extracted from all packets, in this solution, K/2 bytes of packet information may be extracted from the simple packet, to reduce bandwidth of the processor pipeline in a simple packet sending process.

Optionally, the data amount of the first packet information may also be 1/3 of the data amount of the second packet information, or another value less than the data amount of the second packet. In this solution, a specific relationship between the data amount of the first packet information and the data amount of the second packet information is not limited, provided that the data amount of the first packet information is less than the data amount of the second packet information.

Optionally, specific values of the data amount of the first packet information and the data amount of the second packet information may be related to specific services corresponding to the first packet and the second packet.

With reference to the first aspect and the foregoing possible implementations, in another possible implementation, the data amount of the second packet information corresponds to a rate limit value of a rate limit service. In this solution, a data amount extracted from a packet of a complex service may correspond to the rate limit value of the rate limit service, so that a data amount of packet information extracted from a packet of a simple service may be less than a data amount of packet information extracted from the packet of the complex service. Therefore, the power consumption of the processor can be reduced.

With reference to the first aspect and the foregoing possible implementations, in another possible implementation, that the packet parsing module determines that the service complexity corresponding to the first packet is lower than the preset degree includes: The packet parsing module determines, based on at least one of a service processing type corresponding to the first packet or a quantity of packet header layers of the first packet, that the service complexity corresponding to the first packet is lower than the preset degree. In this solution, the service complexity of the first packet may be represented by the service processing type corresponding to the first packet and/or the quantity of packet header layers of the first packet. It may be determined, based on the service processing type corresponding to the first packet and/or the quantity of packet header layers of the first packet, whether the service complexity corresponding to the first packet is lower than the preset degree. Therefore, when the first packet is a simple packet, packet header information of a small data amount is extracted, to reduce bandwidth of a processor pipeline and power consumption of a processor in a process of sending packet information of the simple packet to the processor pipeline. In other words, in this solution, a processing capability can be matched in real time based on complexity of the packet, so that the power consumption of the processor can be reduced.

It may be understood that the service complexity in this embodiment of this application may be reflected by a parameter such as a service processing type and/or a quantity of packet header layers, and the preset degree may be a parameter corresponding to the parameter reflecting the service complexity. For example, when the service complexity is the service processing type, the preset degree is a preset service processing type. When the service complexity is the quantity of packet header layers, the preset degree is a preset quantity of packet header layers.

According to a second aspect of embodiments of this application, a packet processing apparatus is provided. The packet processing apparatus includes: a packet parsing circuit, a packet distribution circuit, and a processor pipeline circuit. The packet parsing circuit is coupled to the packet distribution circuit, and the packet distribution circuit is coupled to the processor pipeline circuit. The packet parsing circuit is configured to parse a first packet, and extract first packet information from the first packet if it is determined that service complexity corresponding to the first packet is lower than a preset degree. A data amount of the first packet information is less than a data amount of second packet information, the second packet information is information extracted from a second packet, and service complexity of the second packet is higher than the preset degree. The packet parsing circuit is further configured to send the first packet information to the packet distribution circuit. The packet distribution circuit is configured to receive the first packet information, and send the first packet information to the processor pipeline circuit. The processor pipeline circuit is configured to receive the first packet information and process the first packet information.

With reference to the second aspect, in a possible implementation, if the packet distribution circuit receives N pieces of first packet information, the packet distribution circuit is further configured to: merge M pieces of first packet information in the N pieces of first packet information to obtain merged information, where N is an integer greater than 1, and M is an integer greater than 1 and less than or equal to N.

With reference to the second aspect and the foregoing possible implementation, in another possible implementation, the M pieces of first packet information are a plurality of pieces of packet information consecutively received by the packet distribution circuit.

With reference to the second aspect and the foregoing possible implementations, in another possible implementation, the processor pipeline circuit includes a plurality of pipelines, and the packet distribution circuit is specifically configured to: send the merged information to a preset pipeline in the processor pipeline circuit.

With reference to the second aspect and the foregoing possible implementations, in another possible implementation, a processor node in the preset pipeline is specifically configured to parse the merged information to obtain M first packets, and process the M first packets in parallel.

With reference to the second aspect and the foregoing possible implementations, in another possible implementation, the merged information includes a first identifier, and the first identifier indicates a quantity of packets corresponding to the merged information.

With reference to the second aspect and the foregoing possible implementations, in another possible implementation, a data amount of the merged information is less than or equal to the data amount of the second packet information.

With reference to the second aspect and the foregoing possible implementations, in another possible implementation, the data amount of the first packet information is half of the data amount of the second packet information.

With reference to the second aspect and the foregoing possible implementations, in another possible implementation, the packet parsing circuit is specifically configured to: determine, based on at least one of a service processing type corresponding to the first packet or a quantity of packet header layers of the first packet, that the service complexity corresponding to the first packet is lower than the preset degree.

According to a third aspect of embodiments of this application, a communication device is provided. The communication device includes an interface circuit and the packet processing apparatus according to the second aspect. The interface circuit is configured to communicate with another apparatus.

According to a fourth aspect of embodiments of this application, a chip is provided. The chip includes a processor and an interface circuit. The processor includes the packet processing apparatus according to the second aspect. The interface circuit is configured to communicate with another apparatus.

### BRIEF DESCRIPTION OF DRAWINGS

FIG. 1 is a schematic diagram of processing packet by a processor pipeline architecture according to an embodiment of this application;
FIG. 2 is a schematic diagram of a structure of a packet processing apparatus according to an embodiment of this application;
FIG. 3 is a schematic flowchart of a packet processing method according to an embodiment of this application;
FIG. 4 is a schematic diagram of application of a packet processing method according to an embodiment of this application;
FIG. 5 is a schematic diagram of application of another packet processing method according to an embodiment of this application;
FIG. 6 is a schematic diagram of application of another packet processing method according to an embodiment of this application;
FIG. 7 is a schematic diagram of application of another packet processing method according to an embodiment of this application; and
FIG. 8 is a schematic diagram of application of another packet processing method according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of means two or more. The term " and/or" describes an association relationship between associated objects, and indicates that three relationships may exist. For example, A and/or B may indicate the following three cases: A exists alone, both A and B exist, and B exists alone, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one (piece) of a, b, or c may represent: a, b, c, a and b, a and c, b and c, or a, b, and c, where a, b, and c may be singular or plural. In addition, to clearly describe the technical solutions in embodiments of this application, terms such as "first" and " second" are used in embodiments of this application to distinguish between same items or similar items that provide basically same functions or purposes. A person skilled in the art may understand that the terms such as "first" and "second" do not limit a quantity and an execution sequence. For example, "first" in a first packet and "second" in a second packet in embodiments of this application are merely used to distinguish between different packets. Descriptions such as "first" and "second" in embodiments of this application are merely used for indicating and distinguishing between described objects, do not show a sequence, do not indicate a specific limitation on a quantity of devices in embodiments of this application, and cannot constitute any limitation on embodiments of this application.

It should be noted that, in this application, words "example" or "for example" are used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a relative concept in a specific manner.

A conventional network processor may process data by using a parallel architecture or a pipeline architecture. The parallel architecture usually includes a plurality of processing units, and data packets are processed in parallel between the plurality of processing units. That is, a single processing unit is responsible for completing processing of an entire data packet. In the pipeline architecture, data packet processing is divided into a plurality of steps, each step is allocated to one processing unit, and after each processing unit completes processing, a data packet is sent to a next processing unit until processing is completed. The pipeline architecture does not accelerate execution of a single data packet, but different operation steps of a plurality of data packets may be simultaneously executed. Therefore, a data packet processing speed is generally accelerated, and a program execution time is reduced.

FIG. 1 is a block diagram of a structure of a pipeline-based processor. As shown in FIG. 1, the processor pipeline architecture includes two pipelines: a pipeline 0 and a pipeline 1. Each pipeline includes i processor nodes, which are respectively denoted as N(1), N(2), N(3), ..., and N(i). Optionally, the processor architecture may further include a shared accelerator (Shared Accelerator). It should be noted that a quantity of pipelines included in the processor pipeline architecture is not limited in this embodiment of this application. In FIG. 1, for example, the processor pipeline architecture includes merely two pipelines. It may be understood that when a processor includes one pipeline (Pipeline), the processor may process one packet in one clock cycle. When the processor includes a plurality of pipelines, the processor may process a plurality of packets in one clock cycle.

To reduce cost of a packet processing resource, first K bytes of data of a packet are generally always intercepted as packet header information, and K bytes of the packet header information are sent to the processor node for processing. For example, as shown in FIG. 1, i processor nodes in the pipeline 0 process K bytes of packet header information 1 extracted from a packet 1, and i processor nodes in a pipeline 2 process K bytes of packet header information 2 extracted from a packet 2.

However, in this solution, regardless of whether a service corresponding to a packet is a complex service or a simple service, first K bytes of data of the packet are always intercepted as packet header information and sent to the processor node for processing. Therefore, when the service corresponding to the packet is the simple service, sending K bytes of packet header information consumes processing bandwidth of all processor nodes, and increases power consumption of the processor.

To reduce the power consumption of the processor, an embodiment of this application provides a packet processing method. In the method, a processing capability can be matched in real time based on service complexity of a packet, to reduce the power consumption of the processor.

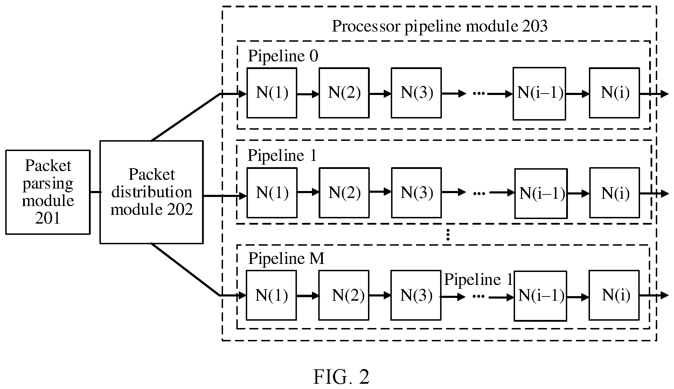

The packet processing method provided in this embodiment of this application may be applied to a packet processing apparatus. As shown in FIG. 2, the packet processing apparatus includes a packet parsing module 201, a packet distribution module 202, and a processor pipeline module 203.

The packet parsing module 201 is configured to parse a packet, compare service complexity corresponding to the packet with a preset degree, and determine whether a service corresponding to the packet is a simple service or a complex service. It should be noted that a classification manner and a classification level of the service complexity corresponding to the packet are not limited in this embodiment of this application. For example, the service complexity corresponding to the packet may be classified into a simple service and a complex service by only one preset degree. In another example, the service complexity corresponding to the packet may also be classified into a simple service, a complex service, and an ultra-complex service by two preset degrees, or may be classified into an ultra-simple service, a simple service, and a complex service. In another example, the service complexity corresponding to the packet may be further classified into an ultra-simple service, a simple service, a complex service, and an ultra-complex service by three preset degrees.

Optionally, the packet parsing module 201 may determine, based on at least one of a service processing type corresponding to a first packet or a quantity of packet header layers of a first packet, whether a service corresponding to the first packet is a simple service or a complex service. The quantity of packet header layers may be a count or an encapsulation layer of a tunnel (Tunnel). A larger quantity of packet header layers indicates that deeper parsing is required.

For example, when the packet parsing module 201 compares the service processing type corresponding to the first packet with the preset degree, the preset degree may be a preset service processing type. The packet parsing module 201 may determine, based on the service processing type corresponding to the first packet, a service corresponding to a packet whose service processing type is more complex than the preset service processing type as a complex service, and determine a service corresponding to a packet whose service processing type is simpler than the preset service processing type as a simple service. For example, the preset service processing type is a common layer 2/3 forwarding service, and the packet parsing module 201 may determine the common layer 2/3 forwarding service as a simple service, and identify a service in which the common layer 2/3 forwarding is overlaid with other processing as a complex service.

For example, when the packet parsing module 201 compares the quantity of packet header layers of the first packet with the preset degree, the preset degree may be a preset quantity of packet header layers. The packet parsing module 201 may determine, based on the quantity of packet header layers of the first packet, a service corresponding to a packet whose quantity of packet header layers is greater than the preset quantity of packet header layers as a complex service, and determine a service corresponding to a packet whose quantity of packet header layers is less than the preset quantity of packet header layers as a simple service. For example, the preset quantity of packet header layers is C, the packet parsing module 201 may determine a service corresponding to a packet whose quantity of packet header layers is C-1 as a simple service, and determine a service corresponding to a packet whose quantity of packet header layers is C+1 as a complex service.

It should be noted that the service complexity in this embodiment of this application may be reflected by a parameter such as a service processing type and/or a quantity of packet header layers, and the preset degree may be a parameter corresponding to the parameter reflecting the service complexity. In this embodiment of this application, a specific method used by the packet parsing module 201 to determine whether the first packet is the simple packet or the complex packet is not limited. The foregoing embodiment is described by using only an example in which the packet parsing module 201 determines that the first packet is the simple packet or the complex packet based on the service processing type corresponding to the first packet or the quantity of packet header layers of the first packet. In a practical application, a condition for determining whether the first packet is the simple packet or the complex packet may be specifically set with reference to an application scenario.

If the packet parsing module 201 determines that service complexity corresponding to a packet is higher than a preset degree, that is, the packet is a complex packet, the packet parsing module 201 extracts K bytes of packet information from the complex packet. If the packet parsing module 201 determines that the service complexity corresponding to the packet is lower than the preset degree, that is, the packet is a simple packet, the packet parsing module 201 extracts packet information less than K bytes from the simple packet. In other words, a data amount of packet information extracted by the packet parsing module 201 from the simple packet is less than a data amount of packet information extracted from the complex packet. Optionally, in this embodiment of this application, packet information extracted from a packet may be packet header information. Optionally, the data amount of the packet information extracted by the packet parsing module 201 from the simple packet may be half of the data amount of the packet information extracted from the complex packet.

The packet parsing module 201 is further configured to send the extracted packet header information to the packet distribution module 202. For example, the packet parsing module 201 may send packet header information less than K bytes (for example, K/2 bytes) extracted from the simple packet to the packet distribution module 202. In another example, the packet parsing module 201 may send K bytes of packet header information extracted from the complex packet to the packet distribution module 202.

The packet distribution module 202 is configured to receive packet header information from the packet parsing module 201. For example, the packet distribution module 202 receives packet header information less than K bytes (for example, K/2 bytes) from the packet parsing module 201. In another example, the packet distribution module 202 receives K bytes of packet header information from the packet parsing module 201.

For example, if a plurality of pieces of packet information received by the packet distribution module 202 from the packet parsing module 201 are packet information of a simple packet, the packet distribution module 202 may merge some or all of the plurality of pieces of packet information to obtain merged information. For example, if the packet distribution module 202 receives two pieces of K/2 bytes of packet header information, the packet distribution module 202 merges the two pieces of K/2 bytes of packet header information to obtain one piece of K bytes of merged information, and sends the K bytes of merged information to the processor pipeline module 203. Optionally, if the processor pipeline module 203 includes a plurality of pipelines, the packet distribution module 202 may send the merged information to a preset pipeline or a specified pipeline in the processor pipeline module 203. There may be one or more preset pipelines.

Optionally, the packet distribution module 202 may merge packet information of a plurality of simple packets into one piece of merged information, or may merge packet information of a plurality of simple packets into a plurality of pieces of merged information. Each piece of merged information is merged by at least one piece of packet information. The packet distribution module 202 may send one piece of merged information to one preset pipeline. If there are a plurality of pieces of merged information, the packet distribution module 202 may respectively send one piece of merged information to a plurality of preset pipelines.

Optionally, the merged information includes a first identifier, and the first identifier indicates a quantity of packets corresponding to the merged information. In other words, the first identifier indicates that the merged information is merged by packet header information of several packets.

The processor pipeline module 203 may include n pipelines, and n is an integer greater than 1. Each pipeline includes i processor nodes. The processor pipeline module 203 may send n packets in one clock cycle. Optionally, the processor pipeline module 203 may send more than n packets in one clock cycle. Optionally, the processor pipeline module shown in FIG. 2 may further include a shared accelerator. When processing a packet, the processor node in the processor pipeline module may query a table entry through the shared accelerator.

The processor pipeline module 203 is configured to receive packet header information sent by the packet distribution module 202, parse the packet header information, obtain a packet corresponding to the packet header information, and process the packet. Optionally, the processor node in the processor pipeline module 203 may receive merged information from the packet distribution module 202, and the merged information includes a plurality of pieces of packet header information. The processor pipeline module 203 may further parse the merged information based on a first identifier in the merged information to obtain a plurality of packets, and perform parallel processing on the plurality of packets.

According to the packet processing apparatus provided in this embodiment of this application, service complexity corresponding to a packet is identified, and based on different service complexity, a data amount of packet information extracted from a simple packet is less than a data amount of packet information extracted from a complex packet, so that bandwidth of the processor pipeline may be reduced in a sending process, and power consumption of a processor may be reduced. In other words, the packet processing apparatus provided in this embodiment of this application can match a processing capability in real time based on packet complexity, to reduce the power consumption of the processor. In addition, in this solution, a plurality of pieces of packet information may be further merged, so that the plurality of packets may be processed in parallel on one pipeline, to further reduce the power consumption of the processor

For example, the packet processing apparatus shown in FIG. 2 may be a device such as a router or a switch, or may be an apparatus in a device such as a router or a switch, or may further be an apparatus in a communication device whose processor is a pipeline architecture. A specific form of the packet processing apparatus is not limited in this embodiment of this application.

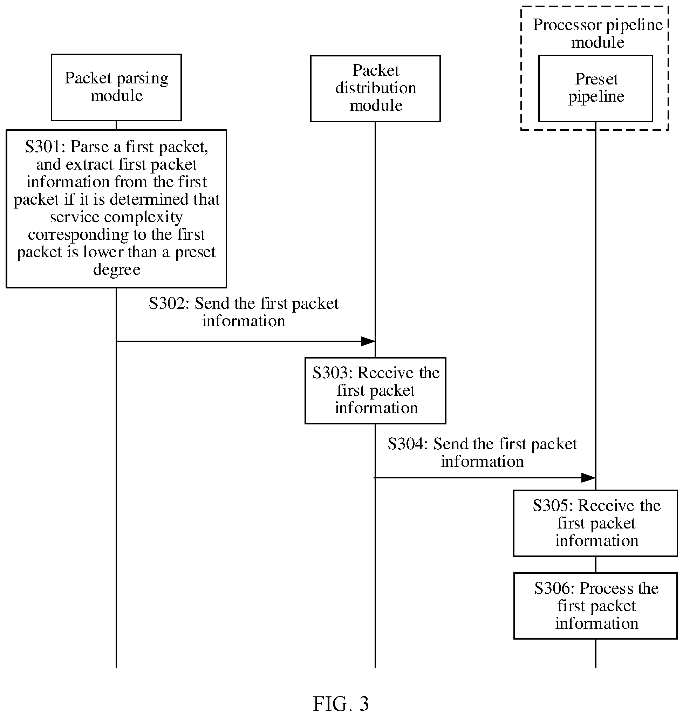

With reference to FIG. 2, FIG. 3 is a packet processing method according to an embodiment of this application. The method includes the following steps.

S301: A packet parsing module parses a first packet, and extracts first packet information from the first packet if it is determined that service complexity corresponding to the first packet is lower than a preset degree.

A data amount of the first packet information is less than a data amount of second packet information, the second packet information is information extracted from a second packet, and service complexity of the second packet is higher than the preset degree.

Optionally, the packet parsing module may further parse the second packet, and extract the second packet information from the first packet if it is determined that the service complexity corresponding to the second packet is higher than the preset degree. The data amount of the second packet information is greater than the data amount of the first packet information.

For example, the packet parsing module may parse packet header information of the first packet, determine the service complexity corresponding to the first packet by identifying information such as a protocol stack (Protocol Stake ) or a packet channel (Channel) configuration of the first packet, and compare the service complexity corresponding to the first packet with the preset degree.

For example, if the service complexity corresponding to the first packet is lower than the preset degree, it is determined that a service corresponding to the first packet is a simple service, and the first packet may be referred to as a simple packet. If the service complexity corresponding to the first packet is higher than the preset degree, it is determined that the service corresponding to the first packet is a complex service, and the first packet may be referred to as a complex packet.

Optionally, the packet parsing module may determine, based on at least one of a service processing type corresponding to a first packet or a quantity of packet header layers of a first packet, whether a service corresponding to the first packet is a complex service or a simple service. For example, the packet parsing module may determine, based on the service processing type corresponding to the first packet, a service corresponding to a packet whose service processing type is more complex than the preset service processing type as a complex service, and determine a service corresponding to a packet whose service processing type is simpler than the preset service processing type as a simple service. In another example, the packet parsing module 201 may determine, based on the quantity of packet header layers of the first packet, a service corresponding to a packet whose quantity of packet header layers is greater than the preset quantity of packet header layers as a complex service, and determine a service corresponding to a packet whose quantity of packet header layers is less than the preset quantity of packet header layers as a simple service.

For example, the packet parsing module may determine that a service processing type of a common layer 2/3 forwarding service is simpler than the preset service processing type, and a service processing type of a common layer 2/3 forwarding service overlaid with other processing is more complex than the preset service processing type. That is, the packet parsing module may determine the common layer 2/3 forwarding service as a simple service, and determine the common layer 2/3 forwarding service overlaid with other processing as a complex service. In another example, the preset degree is that the preset quantity of packet header layers is C. The packet parsing module 201 may determine a service corresponding to a packet whose quantity of packet header layers is less than C as a simple service, and determine a service corresponding to a packet whose quantity of packet header layers is greater than C as a complex service. It may be understood that a classification level between the simple service and the complex service is not limited in this embodiment of this application, and is merely an example for description herein.

It should be noted that the service complexity in this embodiment of this application may be reflected by a parameter such as a service processing type and/or a quantity of packet header layers corresponding to a packet, and the preset degree may be a parameter corresponding to the parameter reflecting the service complexity.

Optionally, when the service complexity corresponding to the first packet is divided, there may be a plurality of preset degrees, that is, there may be a plurality of classification levels for service complexity of a packet. For example, when there are two preset degrees, the service complexity of the packet may be classified into an ultra-simple service, a simple service, and a complex service. In another example, when there are three preset degrees, the service complexity of the packet may be classified into an ultra-simple service, a simple service, a complex service, and an ultra-complex service.

For example, there are two preset degrees: a first preset degree and a second preset degree, and the first preset degree is simpler than the second preset degree. If the service complexity corresponding to the first packet is lower than the first preset degree, the service corresponding to the first packet is an ultra-simple service. If the service complexity corresponding to the first packet is higher than the first preset degree and lower than the second preset degree, the service corresponding to the first packet is a simple service. If the service complexity corresponding to the first packet is higher than the second preset degree, the service corresponding to the first packet is an ultra-complex service. It may be understood that a quantity of classification levels of service complexity corresponding to a packet and a division condition of each boundary are not limited in this embodiment of this application. In the following embodiment, an example in which there is only one classification level (preset degree), that is, the service complexity corresponding to the packet is classified into a simple service and a complex service is used for description.

Optionally, for a same preset degree, a packet whose service complexity is lower than the preset degree is simpler than a packet whose service complexity is higher than the preset degree. In other words, the packet whose service complexity is higher than the preset degree is more complex than the packet whose service complexity is lower than the preset degree.

For example, for a same preset degree, a data amount of first packet information extracted from the packet whose service complexity is lower than the preset degree is less than a data amount of second packet information extracted from the packet whose service complexity is higher than the preset degree.

For example, for a first packet whose service complexity is lower than the preset degree, K1 bytes of first packet information may be extracted from the first packet, and for a second packet whose service complexity is higher than the preset degree, K2 bytes of second packet information may be extracted from the second packet, where K 1 is less than K2. In other words, in this embodiment of this application, based on service complexity corresponding to a packet, a small data amount of packet information may be extracted from a simple packet, and a large data amount of packet information may be extracted from a complex packet. Specific values of K1 and K2 are not limited in this embodiment of this application, provided that K 1 is less than K2. The specific values of K 1 and K2 may be related to specific services corresponding to the first packet and the second packet.

Optionally, packet information extracted from a packet may be packet header information.

Optionally, when there is one preset degree, service complexity of a packet may be classified into a simple service and a complex service, and a data amount K 1 bytes of packet information extracted from a packet of the simple service may be half of a data amount K2 bytes of packet information extracted from a packet of the complex service. For example, a data amount of packet header information extracted from the packet of the complex service is K bytes, and a data amount of packet header information extracted from the packet of the simple service may be K/2 bytes. Specific values of K1 and K2 and a relationship between K1 and K2 are not limited in this embodiment of this application. For example, K1 may also be 1/3 of K2. In the following embodiment, an example in which K1 is only half of K2 is used for description.

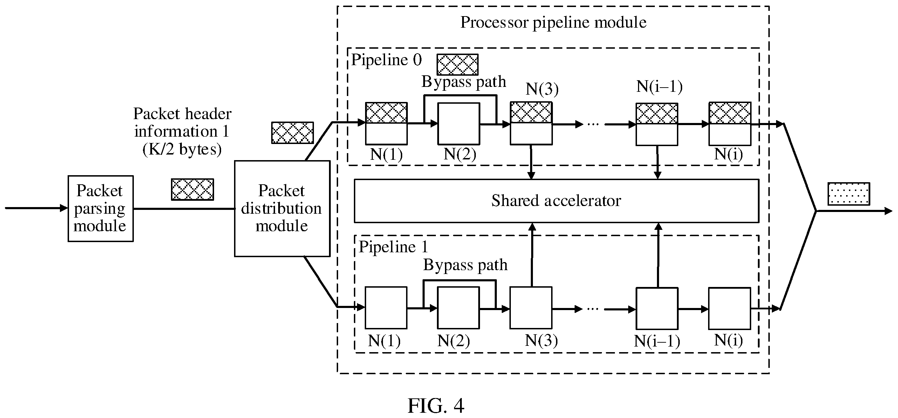

For example, as shown in FIG. 4, a processor can send one packet in one beat. The packet parsing module parses a packet 1, and extracts K/2 bytes of packet header information 1 from the packet 1 if it is determined that service complexity corresponding to the packet 1 is lower than a preset degree. It may be understood that the packet header information 1 shown in FIG. 4 is extracted from the packet 1. Optionally, a processor pipeline module shown in FIG. 4 may include a shared accelerator. When processing a packet, a processor node in the processor pipeline module may query a table entry through the shared accelerator.

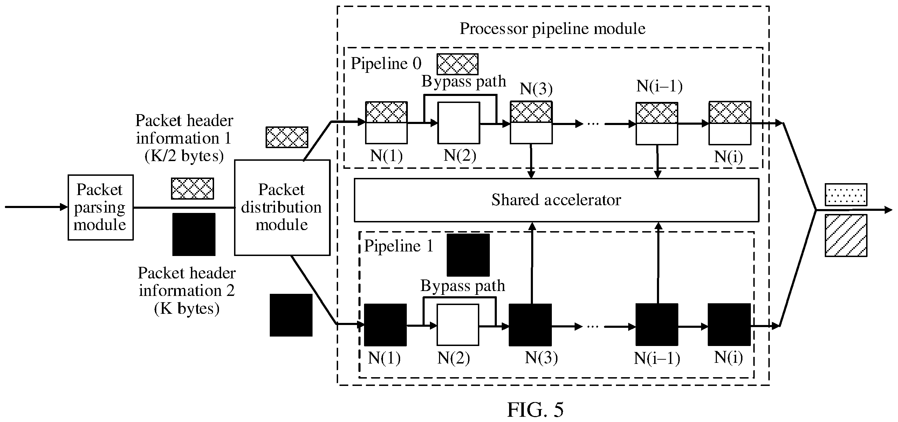

In another example, as shown in FIG. 5, a processor can send two packets in one beat, and the two packets are a packet 1 and a packet 2. A packet parsing module parses the packet 1 and the packet 2, and extracts K/2 bytes of packet header information 1 from the packet 1 if it is determined that service complexity corresponding to the packet 1 is lower than a preset degree. The packet parsing module extracts K bytes of packet header information 2 from the packet 2 if it is determined that service complexity corresponding to the packet 2 is higher than the preset degree. It may be understood that the packet header information 1 shown in FIG. 5 is extracted from the packet 1, and the packet header information 2 is extracted from the packet 2.

Optionally, a data amount (K bytes) of second packet information may be a preset value. The data amount of the second packet information may correspond to a rate limit value of a rate limit service. If the rate limit values of the rate limit service are different, sizes of a data amount of second packet information extracted from a complex packet may be different.

S302: The packet parsing module sends the first packet information to a packet distribution module.

For example, as shown in FIG. 4, in a case that the packet 1 is a simple packet, the packet parsing module may send the K/2 bytes of packet header information 1 extracted from the packet 1 to the packet distribution module.

Optionally, the packet parsing module may further send the second packet information to the packet distribution module.

For example, as shown in FIG. 5, in a case that the packet 1 is a simple packet, the packet parsing module may send the K/2 bytes of packet header information 1 extracted from the packet 1 to the packet distribution module. In a case that the packet 2 is a complex packet, the packet parsing module may send the K bytes of packet header information 2 extracted from the packet 2 to the packet distribution module.

S303: The packet distribution module receives the first packet information from the packet parsing module.

For example, as shown in FIG. 4, the packet distribution module receives the K/2 bytes of packet header information 1 from the packet parsing module.

Optionally, the packet distribution module may further receive the second packet information from the packet parsing module.

Optionally, as shown in FIG. 5, the packet distribution module receives the K/2 bytes of packet header information 1 and the K bytes of packet header information 2 from the packet parsing module.

S304: The packet distribution module sends the first packet information to the processor pipeline module.

For example, the packet distribution module may send the first packet information to a preset pipeline in the processor pipeline module.

For example, as shown in FIG. 4, the preset pipeline is a pipeline 0, and the packet distribution module may send the K/2 bytes of packet header information 1 to the pipeline 0.

Optionally, the packet distribution module may further send the second packet information to the processor pipeline module.

For example, as shown in FIG. 5, the packet distribution module may send the K/2 bytes of packet header information 1 to a pipeline 0, and send the K bytes of packet header information 2 to a pipeline 1.

Optionally, the packet distribution module may send the first packet information or the second packet information to a corresponding pipeline in the processor pipeline module based on a port or flow information.

Optionally, packet information sent by the packet distribution module to the processor pipeline module may include a first identifier, and the first identifier indicates a quantity of packets corresponding to the packet information, so that a processor node in the processor pipeline module may process the packet information based on the first identifier. For example, if the first identifier indicates that there is one packet corresponding to the packet information, the processor node in the processor pipeline module may process the packet information as a single packet. If the first identifier indicates that there are a plurality of packets corresponding to the packet information, that is, the K bytes of packet information received by the processor pipeline module is merged by packet information of a plurality of packets, the processor node in the processor pipeline module may parse the packet information into a plurality of packets, and process the plurality of packets in parallel on the preset pipeline.

S305: The processor pipeline module receives the first packet information from the packet distribution module.

For example, the preset pipeline in the processor pipeline module receives the first packet information from the packet distribution module.

For example, as shown in FIG. 4, the preset pipeline is the pipeline 0, and the pipeline 0 receives the K/2 bytes of packet header information 1 from the packet distribution module.

Optionally, the processor pipeline module may further receive the second packet information from the packet distribution module.

For example, as shown in FIG. 5, the pipeline 0 receives the K/2 bytes of packet header information 1 from the packet distribution module, and the pipeline 1 receives the K bytes of packet header information 2 from the packet distribution module.

S306: The processor pipeline module processes the first packet information.

For example, as shown in FIG. 4, the pipeline 0 processes the received K/2 bytes of packet header information 1 as a single packet.

Optionally, the processor pipeline module may further process the second packet information.

For example, as shown in FIG. 5, the pipeline 0 processes the received K/2 bytes of packet header information 1, and the pipeline 1 processes the received K bytes of packet header information 2.

Optionally, the processor node in the processor pipeline module may process the first packet information based on the first identifier in the first packet information. For example, if there is one packet indicated by the first identifier, the processor node in the processor pipeline module processes the first packet information as a single packet.

Optionally, each pipeline includes a plurality of processor nodes. If the first packet or the second packet does not need to be processed on a processor node, the first packet or the second packet may be sent to a next processor node through a bypass path (Bypass Path). For example, as shown in FIG. 4, if the packet 1 does not need to be processed by a processor node N(2), after processing the packet header information 1, a processor node N(1) in the pipeline 0 sends the processed packet header information 1 to a processor node N(3) through the bypass path instead of the processor node N(2) in the pipeline 0. In another example, as shown in FIG. 5, if neither the packet 1 nor the packet 2 needs to be processed by a processor node N(2), after processing the packet header information 1, a processor node N(1) in the pipeline 0 sends the processed packet header information 1 to a processor node N(3) through the bypass path instead of the processor node N(2) in the pipeline 0. After processing the packet header information 2, the processor node N(1) in the pipeline 1 sends the processed packet header information 2 to the processor node N(3) through the bypass path instead of the processor node N(2) in the pipeline 1.

As shown in FIG. 4 and FIG. 5, according to the packet processing method provided in this embodiment of this application, the service complexity corresponding to the first packet is determined. When the service complexity corresponding to the first packet is lower than the preset degree, the K/2 bytes of packet header information 1 are extracted from the first packet, and when the service complexity corresponding to the second packet is higher than the preset degree, the K bytes of packet header information 2 are extracted from the second packet. In other words, in this embodiment of this application, different data amounts of packet header information may be extracted based on different service complexity corresponding to a packet. Compared with the solution in which K bytes of packet header information are always extracted for all packets shown in FIG. 1, this solution in which when a service corresponding to a packet is a simple service, a small data amount of packet header information can be extracted reduces bandwidth on a processor pipeline, and power consumption of a processor.

According to the packet processing method provided in this embodiment of this application, service complexity corresponding to a packet is determined, and a matched packet processing capability is selected based on different service complexity. Therefore, the bandwidth on the processor pipeline is reduced, and the power consumption of the processor is reduced.

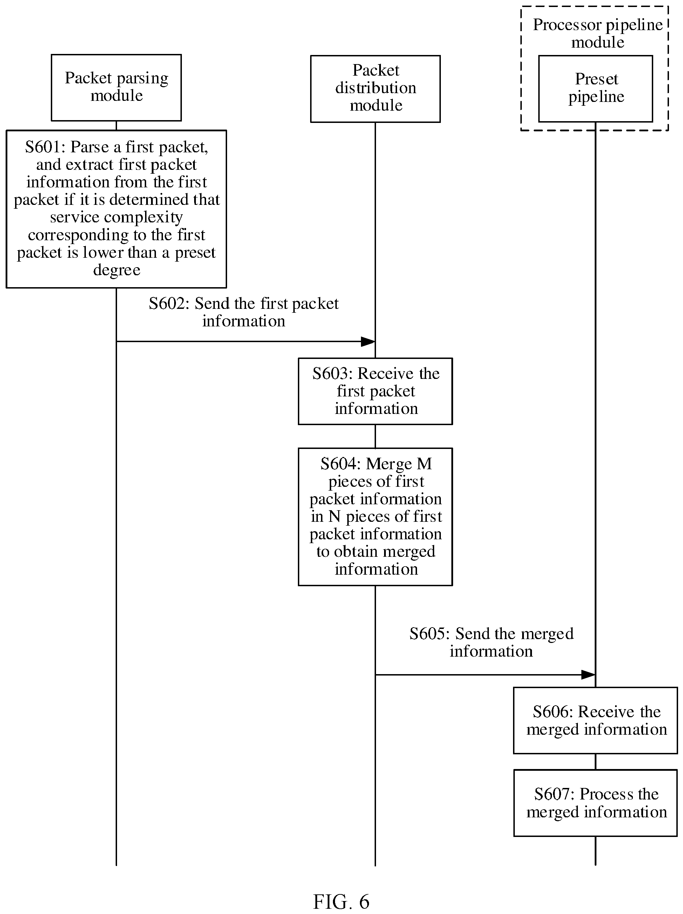

FIG. 6 is another packet processing method according to an embodiment of this application. As shown in FIG. 6, when there are a plurality of first packets whose service complexity is lower than a preset degree, the method may include the following steps.

S601: A packet parsing module parses a first packet, and extracts first packet information from the first packet if it is determined that service complexity corresponding to the first packet is lower than a preset degree.

Optionally, the packet parsing module may further parse a second packet, and extract second packet information from the first packet if it is determined that service complexity corresponding to the second packet is higher than the preset degree. A data amount of the second packet information is greater than a data amount of the first packet information.

It may be understood that, for a specific implementation of step S601, refer to step S301. Details are not described herein again.

For example, this embodiment is described by using an example in which a quantity of first packets whose service complexity is lower than the preset degree is N, where N is an integer greater than 1.

Optionally, the N first packets may be a plurality of packets sent to a processor in one clock cycle, or may be a plurality of packets sent to a processor in different clock cycles.

For example, in a case that the processor may process a plurality of packets in one clock cycle, the plurality of packets may all be simple packets.

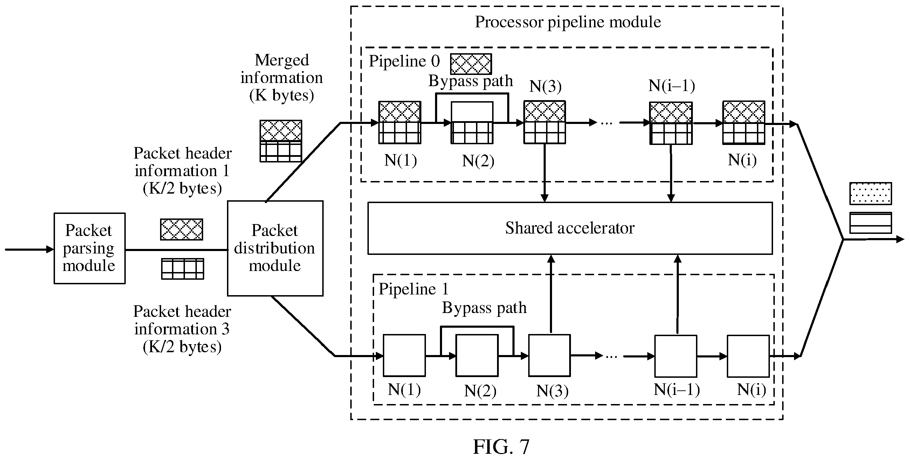

For example, as shown in FIG. 7, a processor pipeline module includes two pipelines, and a processor may process two packets, that is, a packet 1 and a packet 3 in one clock cycle. A packet parsing module parses the packet 1 and the packet 3, and extracts K/2 bytes of packet header information 1 from the packet 1 if it is determined that service complexity corresponding to the packet 1 is lower than a preset degree. The packet parsing module extracts K/2 bytes of packet header information 2 from the packet 3 if it is determined that service complexity corresponding to the packet 3 is also lower than the preset degree. It may be understood that the packet header information 1 shown in FIG. 7 is extracted from the packet 1, and the packet header information 3 is extracted from the packet 3.

For example, in a case that the processor may process a plurality of packets in one clock cycle, the plurality of packets may include both a simple packet and a complex packet.

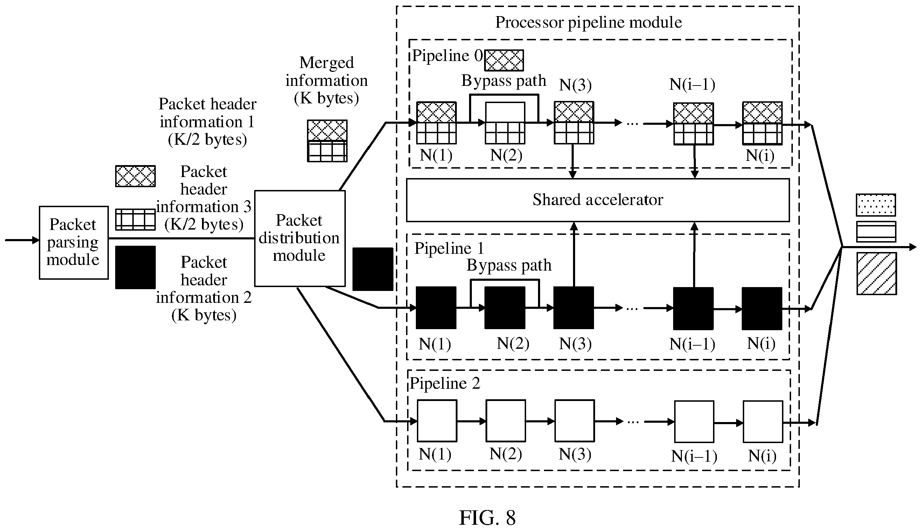

For example, as shown in FIG. 8, a processor pipeline module includes three pipelines, and a processor may process three packets, that is, a packet 1, a packet 3, and a packet 2 in one clock cycle. A packet parsing module parses the packet 1, the packet 3, and the packet 2, and extracts K/2 bytes of packet header information 1 from the packet 1 if it is determined that service complexity corresponding to the packet 1 is lower than a preset degree. The packet parsing module extracts K/2 bytes of packet header information 3 from the packet 3 if it is determined that service complexity corresponding to the packet 3 is lower than the preset degree. The packet parsing module extracts K bytes of packet header information 2 from the packet 2 if it is determined that service complexity corresponding to the packet 2 is higher than the preset degree. It may be understood that the packet header information 1 shown in FIG. 8 is extracted from the packet 1, the packet header information 3 is extracted from the packet 3, and the packet header information 2 is extracted from the packet 2.

S602: The packet parsing module sends the first packet information to a packet distribution module.

Optionally, the packet parsing module may further send the second packet information to the packet distribution module.

For example, as shown in FIG. 7, in a case that the packet 1 is a simple packet, the packet parsing module may send the K/2 bytes of packet header information 1 extracted from the packet 1 to the packet distribution module. In a case that the packet 3 is a simple packet, the packet parsing module may send the K/2 bytes of packet header information 3 extracted from the packet 3 to the packet distribution module.

For example, as shown in FIG. 8, in a case that the packet 1 is a simple packet, the packet parsing module may send the K/2 bytes of packet header information 1 extracted from the packet 1 to the packet distribution module. In a case that the packet 3 is a simple packet, the packet parsing module may send the K/2 bytes of packet header information 3 extracted from the packet 3 to the packet distribution module. In a case that the packet 2 is a complex packet, the packet parsing module may send the K bytes of packet header information 2 extracted from the packet 2 to the packet distribution module.

S603: The packet distribution module receives the first packet information from the packet parsing module.

For example, as shown in FIG. 7, the packet distribution module receives the K/2 bytes of packet header information 1 and the K/2 bytes of packet header information 3 from the packet parsing module.

For example, as shown in FIG. 8, the packet distribution module receives the K/2 bytes of packet header information 1, the K/2 bytes of packet header information 3, and the K bytes of packet header information 2 from the packet parsing module.

S604: The packet distribution module merges M pieces of first packet information in N pieces of first packet information to obtain merged information.

M is an integer greater than 1 and less than or equal to N.

For example, the packet distribution module may merge first packet information respectively extracted from a plurality of first packets, to obtain the merged information. Optionally, the packet distribution module may merge some of the N pieces of first packet information, or may merge all of the N pieces of first packet information. It should be noted that a data amount of merged information obtained after a plurality of pieces of first packet information are merged is less than or equal to a data amount of the second packet information. For example, a data amount of merged information obtained after merging is less than or equal to K bytes.

For example, if the packet distribution module consecutively receives two pieces of first packet information, and a data amount of each piece of first packet information is K/2 bytes, the packet distribution module may merge the two pieces of first packet information into K bytes of merged information. In another example, if the packet distribution module consecutively receives three pieces of first packet information, and a data amount of each piece of first packet information is K/2 bytes, the packet distribution module may merge first received two pieces of first packet information into K bytes of merged information.

Optionally, when merging the M pieces of first packet information, the packet distribution module may obtain one or more pieces of merged information, and each piece of merged information is merged by at least one piece of first packet information. For example, if the packet distribution module consecutively receives four pieces of first packet information, and a data amount of each piece of first packet information is K/2 bytes, the packet distribution module may merge first received two pieces of first packet information into K bytes of merged information 1, and merge last received two pieces of first packet information into K bytes of merged information 2.

Optionally, a plurality of pieces of merged information merged by the M pieces of first packet information may be sent to the processor in one clock cycle, or may be sent to the processor in different clock cycles.

Optionally, when the packet distribution module merges a plurality of pieces of first packet information into one piece of merged information, the plurality of pieces of first packet information may be a plurality of pieces of first packet information consecutively received by the packet distribution module. In other words, if the packet distribution module consecutively receives a plurality of pieces of first packet information, the packet distribution module may merge the plurality of pieces of first packet information.

For example, as shown in FIG. 7, after receiving K/2 bytes of packet header information 1 and K/2 bytes of packet header information 3, the packet distribution module may merge the K/2 bytes of packet header information 1 and the K/2 bytes of packet header information 3, to obtain K bytes of merged information.

In another example, a plurality of pieces of packet information received by the packet distribution module are sequentially packet header information 1, packet header information 3, and packet header information 2. As shown in FIG. 8, the packet distribution module may merge K/2 bytes of packet header information 1 and K/2 bytes of packet header information 3 consecutively received by the packet distribution module, to obtain K bytes of merged information.

Optionally, when the packet distribution module merges a plurality of pieces of first packet information into one piece of merged information, the plurality of pieces of first packet information may also be a plurality of pieces of first packet information received by the packet distribution module within preset duration. In other words, if the packet distribution module receives a plurality of pieces of first packet information within the preset duration, the packet distribution module may merge the plurality of pieces of first packet information.

S605: The packet distribution module sends the merged information to the processor pipeline module.

For example, the packet distribution module may send the merged information to a preset pipeline in the processor pipeline module. Optionally, there may be a plurality of preset pipelines, and there may be different priorities between the plurality of preset pipelines.

For example, as shown in FIG. 7, the preset pipeline is a pipeline 0, and the packet distribution module may send the K bytes of merged information to the pipeline 0.

Optionally, the packet distribution module may further send the first packet information or the second packet information to the processor pipeline module.

For example, as shown in FIG. 8, the preset pipeline is a pipeline 0, and the packet distribution module may send the K bytes of merged information to the pipeline 0 and send the K bytes of packet header information 2 to a pipeline 1.

It may be understood that, in this solution, after merging the plurality of pieces of first packet information to obtain the merged information, the packet distribution module may send the merged information to the preset pipeline in the processor pipeline module. Optionally, when there are a plurality of pieces of merged information, the packet distribution module may separately send the plurality of pieces of merged information to the plurality of preset pipelines. In other words, the packet distribution module sends one piece of merged information to one preset pipeline.

Optionally, the merged information may include a first identifier, and the first identifier indicates a quantity of packets corresponding to the merged information. In other words, the first identifier indicates that the merged information is merged by several pieces of packet information, so that when receiving the merged information, the processor pipeline module may determine, based on the first identifier, that the merged information is merged by several pieces of first packet information.

S606: The processor pipeline module receives the merged information from the packet distribution module.

For example, the preset pipeline in the processor pipeline module receives the first packet information from the packet distribution module.

For example, as shown in FIG. 7, the preset pipeline is the pipeline 0, and the pipeline 0 receives the K bytes of merged information from the packet distribution module.

Optionally, the processor pipeline module may further receive the first packet information or the second packet information from the packet distribution module.

For example, as shown in FIG. 8, the preset pipeline is the pipeline 0, the pipeline 0 receives the K bytes of merged information from the packet distribution module, and the pipeline 1 receives the K bytes of packet header information 2 from the packet distribution module.

S607: The processor pipeline module processes the merged information.

For example, a processor node in the preset pipeline in the processor pipeline module may process the merged information based on the first identifier in the merged information. If the processor node determines that there are a plurality of packets indicated by the first identifier, the processor node may determine that the K bytes of merged information are merged by a plurality of pieces of first packet information. When processing the merged information, the processor node may parse the merged information into a plurality of first packets, and process the plurality of packets in parallel on the preset pipeline.

For example, as shown in FIG. 7, the pipeline 0 receives the K bytes of merged information, parses the merged information into two first packets, and processes the two packets in parallel on the pipeline 0. It may be understood that, as shown in FIG. 7, when the pipeline 0 in the processor pipeline module processes the packet 1 and the packet 2 in parallel, a processor node on the pipeline 1 is not flipped. In other words, when the pipeline 0 processes the packet 1 and the packet 2 in parallel, the pipeline 1 may not work, to further reduce the power consumption of the processor

Optionally, if the processor node determines that there is one packet indicated by the first identifier, the processor node may determine that packet information received by the processor node is packet information of a single packet, and the processor node processes the packet information as the single packet.

For example, as shown in FIG. 8, a processor node in the pipeline 0 receives the K bytes of merged information and the K bytes of the packet header information 2. The processor node in the pipeline 0 determines, based on the first identifier in the merged information, that the merged information is merged by two pieces of packet information. The processor node parses the merged information into two first packets, and processes the two packets in parallel on the pipeline 0. A processor node in the pipeline 1 determines, based on a first identifier in the packet header information 2, that the packet header information 2 is packet header information of a single packet, and the processor node processes the packet information 2 as the single packet. It may be understood that, as shown in FIG. 8, when the pipeline 0 in the processor pipeline module processes the packet 1 and the packet 3 in parallel, and the pipeline 1 processes the packet 2, a processor node on the pipeline 3 is not flipped. In other words, when the pipeline 0 processes the packet 1 and the packet 3 in parallel, and the pipeline 1 processes the packet 2, a pipeline 2 may not work, to further reduce the power consumption of the processor.

According to the packet processing method provided in this embodiment of this application, service complexity corresponding to a packet is determined, and a matched packet processing capability is selected based on different service complexity. Therefore, the bandwidth on the processor pipeline is reduced, and the power consumption of the processor is reduced. In addition, packet information extracted from a plurality of simple packets is merged, and the plurality of simple packets are processed in parallel in the processor pipeline module, so that processor nodes of some pipelines are not flipped, to further reduce the power consumption of the processor.

The foregoing mainly describes, from a perspective of the steps of the methods, the solutions provided in the embodiments of the present invention. It may be understood that, to implement the foregoing functions, a computer includes corresponding hardware structures and/or software modules for performing the functions. A person skilled in the art should be easily aware that, in combination with units and algorithm steps of the examples described in the embodiments disclosed in this specification, this application may be implemented by a combination of hardware and computer software. A person skilled in the art may use different methods to implement the described functions for each particular application, but it should not be considered that the implementation goes beyond the scope of the present invention.

An embodiment of this application further provides a packet parsing circuit. The packet parsing circuit is configured to perform a method and a function of the packet parsing module in the packet processing method shown in FIG. 3 or FIG. 6.

An embodiment of this application further provides a packet distribution circuit. The packet distribution circuit is configured to perform a method and a function of the packet distribution module in the packet processing method shown in FIG. 3 or FIG. 6.

An embodiment of this application further provides a processor pipeline circuit. The processor pipeline circuit is configured to perform a method and a function of the processor pipeline module in the packet processing method shown in FIG. 3 or FIG. 6.

An embodiment of this application provides a processor. The processor includes a packet parsing circuit, a packet distribution circuit, and a processor pipeline circuit. The packet parsing circuit is coupled to the packet distribution circuit, and the packet distribution circuit is coupled to the processor pipeline circuit. The packet parsing circuit is configured to perform a method and a function of the packet parsing module in the foregoing embodiments. The packet distribution circuit is configured to perform a method and a function of the packet distribution module in the foregoing embodiments. The processor pipeline circuit is configured to perform a method and a function of the processor pipeline module in the foregoing embodiments.

An embodiment of this application further provides a communication device. The communication device includes a packet parsing module, a packet distribution module, and a processor pipeline module. The packet parsing module, the packet distribution module, and the processor pipeline module are configured to perform the packet processing method shown in FIG. 3 or FIG. 6.

An embodiment of this application further provides a packet processing apparatus. The apparatus may exist as a product in a form of a chip. A structure of the apparatus includes a processor and an interface circuit. The processor is configured to communicate with another apparatus through the interface circuit, to enable the apparatus to perform the packet processing method shown in FIG. 3 or FIG. 6.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The objectives, technical solutions, and benefits of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A packet processing method, wherein the method comprises:
parsing, by a packet parsing module, a first packet, and extracting first packet information from the first packet if it is determined that service complexity corresponding to the first packet is lower than a preset degree, wherein a data amount of the first packet information is less than a data amount of second packet information, the second packet information is information extracted from a second packet, and service complexity of the second packet is higher than the preset degree;
sending, by the packet parsing module, the first packet information to a packet distribution module;
receiving, by the packet distribution module, the first packet information, and sending the first packet information to a processor pipeline module; and
receiving, by the processor pipeline module, the first packet information, and processing the first packet information.

2. The method according to claim 1, wherein if the packet distribution module receives N pieces of first packet information, the method further comprises:
merging, by the packet distribution module, M pieces of first packet information in the N pieces of first packet information to obtain merged information, wherein N is an integer greater than 1, and M is an integer greater than 1 and less than or equal to N.

3. The method according to claim 2, wherein the M pieces of first packet information are a plurality of pieces of first packet information consecutively received by the packet distribution module.

4. The method according to claim 2 or 3, wherein the processor pipeline module comprises a plurality of pipelines, and the sending, by the packet distribution module, the first packet information to a processor pipeline module comprises:
sending, by the packet distribution module, the merged information to a preset pipeline in the processor pipeline module.

5. The method according to claim 4, wherein the processing, by the processor pipeline module, the first packet information comprises:
parsing, by a processor node in the preset pipeline, the merged information to obtain M first packets; and
processing, by the processor node in the preset pipeline, the M first packets in parallel.

6. The method according to any one of claims 2 to 5, wherein the merged information comprises a first identifier, and the first identifier indicates a quantity of packets corresponding to the merged information.

7. The method according to any one of claims 2 to 6, wherein a data amount of the merged information is less than or equal to the data amount of the second packet information.

8. The method according to any one of claims 1 to 7, wherein the data amount of the first packet information is half of the data amount of the second packet information.

9. The method according to any one of claims 1 to 8, wherein the determining, by the packet parsing module, that the service complexity corresponding to the first packet is lower than the preset degree comprises:
determining, by the packet parsing module based on at least one of a service processing type corresponding to the first packet or a quantity of packet header layers of the first packet, that the service complexity corresponding to the first packet is lower than the preset degree.

10. A packet processing apparatus, wherein the packet processing apparatus comprises: a packet parsing circuit, a packet distribution circuit, and a processor pipeline circuit, the packet parsing circuit is coupled to the packet distribution circuit, and the packet distribution circuit is coupled to the processor pipeline circuit, wherein
the packet parsing circuit is configured to parse a first packet, and extract first packet information from the first packet if it is determined that service complexity corresponding to the first packet is lower than a preset degree, wherein a data amount of the first packet information is less than a data amount of second packet information, the second packet information is information extracted from a second packet, and service complexity of the second packet is higher than the preset degree;
the packet parsing circuit is further configured to send the first packet information to the packet distribution circuit;
the packet distribution circuit is configured to receive the first packet information, and send the first packet information to the processor pipeline circuit; and
the processor pipeline circuit is configured to receive the first packet information and process the first packet information.

11. The apparatus according to claim 10, wherein if the packet distribution circuit receives N pieces of first packet information, the packet distribution circuit is further configured to:
merge M pieces of first packet information in the N pieces of first packet information to obtain merged information, wherein N is an integer greater than 1, and M is an integer greater than 1 and less than or equal to N.

12. The apparatus according to claim 11, wherein the M pieces of first packet information are a plurality of pieces of packet information consecutively received by the packet distribution circuit.

13. The apparatus according to claim 11 or 12, wherein the processor pipeline circuit comprises a plurality of pipelines, and the packet distribution circuit is specifically configured to:
send the merged information to a preset pipeline in the processor pipeline circuit.

14. The apparatus according to claim 13, wherein a processor node in the preset pipeline is specifically configured to parse the merged information to obtain M first packets, and process the M first packets in parallel.

15. The apparatus according to any one of claims 11 to 14, wherein the merged information comprises a first identifier, and the first identifier indicates a quantity of packets corresponding to the merged information.

16. The apparatus according to any one of claims 11 to 15, wherein a data amount of the merged information is less than or equal to the data amount of the second packet information.

17. The apparatus according to any one of claims 10 to 16, wherein the data amount of the first packet information is half of the data amount of the second packet information.

18. The apparatus according to any one of claims 10 to 17, wherein the packet parsing circuit is specifically configured to:
determine, based on at least one of a service processing type corresponding to the first packet or a quantity of packet header layers of the first packet, that the service complexity corresponding to the first packet is lower than the preset degree.

19. A communication device, wherein the communication device comprises an interface circuit and the packet processing apparatus according to any one of claims 10 to 18, wherein the interface circuit is configured to communicate with another apparatus.
